# EUROPEAN PATENT APPLICATION

(11) **EP 4 560 941 A1**
(43) Date of publication of application: **28.05.2025**
(21) Application number: 23383214.6
(22) Date of filing: 27.11.2023
(51) Int. Cl.: H04B 10/278, H04B 10/40

(54) **PHOTONIC TRANSCEIVER MODULE, PERIPHERY DEVICE, COMMUNICATION SYSTEM AND APPARATUS COMPRISING SAME**

(71) Applicant: Airbus Defence and Space GmbH, 82024 Taufkirchen (DE); Airbus Defence and Space S.A.U., 28906 Getafe, Madrid (ES)
(72) Inventor: ALBERTONI, Alessandro, 82024 Taufkirchen (DE); VARILLAS HERNANDEZ, Antonio Miguel, 28906 Getafe, Madrid (ES); WITTMANN, David, 82024 Taufkirchen (DE)
(74) Representative: LKGLOBAL Lorenz & Kopf Patentanwalt Attorney at Law PartG mbB

(57) **Abstract**

A photonic transceiver module (20) and a photonic periphery device (21) with a photonic transceiver module (20) for a photonic communication system (10) of an apparatus (1), as well as the photonic communication system (10) and the apparatus (1), in particular a vehicle, such as an aircraft, are described, the photonic transceiver module (20) comprising at least one signal interface (23) for receiving and/or transmitting a signal from and/or to, respectively, at least one data collecting and/or transmitting unit (4) for collecting and/or transmitting, respectively, at least one parameter value, an optical modulation unit (24) for translating the signal to and/or from, respectively, the optical domain, and a device adaptor (22) configured to attach the photonic transceiver module (20) to the at least one data collecting and/or transmitting unit (4) to communicate in the optical domain as a node (5) of the photonic communication system (10).

## Description

### Technical Field

The present disclosure relates to photonic communications in vehicles. In particular, the present disclosure relates to a photonic transceiver module for a photonic communication system of an apparatus, in particular a vehicle, such as an aircraft, to a photonic periphery device for a photonic communication system of an apparatus, in particular a vehicle, such as an aircraft, to a photonic communication system for an apparatus, in particular a vehicle, such as an aircraft, and to an apparatus, such as a vehicle, in particular an aircraft.

### Technical Background

Operational requirements for the next generation of apparatuses, in particular vehicles, such as aircrafts, demand a large amount of various sensor (and actuator) apertures that have to be integrated into respective measurement and control systems, e.g., avionic and mission systems of aircrafts. Those sensors provide large coverage in terms of spectrum (radio frequency, electro-optics) and applications (Navigation, Communication, Sensing etc.). The installation of individual, isolated sensor systems and apertures are adding complexity to the aircraft design, manufacturing, and in-service support. Additionally, they come with additional constraints e.g., on complex traditional high-speed networks or size, weight and power (SWaP) requirements. This approach results in complex, costly and impaired usage on modern aircrafts, which are increased due to challenging environmental constrains.

Photonic communication systems are increasingly implemented for use in apparatuses, for example in vehicles, such as aircrafts. Since photonic communication systems are mainly based on optical principles (instead of electrical), such systems have an intrinsic level of immunity to electromagnetic interference or hazards. Accordingly, the need for electromagnetic shielding of photonic communication systems is reduced or even eliminated. Photonic communication systems communicate via connections mainly involving non-electrically conductive materials, such as optical fibres, and therefore rather do not conduct direct or indirect currents generated when lightning strikes the aircraft. Thus, the need to electrically isolate terminal ends of the photonic communication system from each other is reduced or eliminated. As a result, photonic communication systems can also have less weight in comparison with equivalent electrical communication systems, also owing to the fact that optical fibre tends to be lighter than electrical cabling.

Therefore, photonic communications can be particularly attractive for the use in aircraft applications, as where a continuous drive to reduce weight so as to reduce aircraft fuel consumption is present. Corresponding prior art considers optical fibre links as data highways for a point-to-point replacement of metal-based connection, data link or wave guides. According to the prior art, any application (sharing sensors, data link, sensing) is normally done by complete discrete and complex integration of different parts, resulting in low performance high-cost solutions.

EP 3 970 286 B1, for example, refers to a terminal for optical communication by laser signals comprising a matrix image sensor that is used as a tracking and acquisition detector. The matrix image sensor is used simultaneously to check that a portion of the laser signals that are received by the terminal are injected into an optical fibre. A spectral filter element is associated with the matrix image sensor to allow such a combination of functions. The terminal can then be particularly compact and lightweight.

EP 3 327 958 B1 refers to various embodiments providing a fibre-optic communication system for an aircraft. The system comprises: a light source operable to generate light; a transceiver in optical communication with the light source so as to receive the light therefrom, the transceiver comprising a control input and a reflector; an optical fibre in optical communication with the transceiver; and a light detector in optical communication with the optical fibre. The transceiver is operable to generate an amplitude modulated light signal by selectively reflecting the light received from the light source into the optical fibre using the reflector according to information received at the control input. The light detector is operable to receive the amplitude modulated light signal from the optical fibre and to detect an amplitude of the amplitude modulated light signal to extract the information.

WO 2021/229023 A1 relates a signal processing method and apparatus for use in a satellite payload in which an input RF signal received at a receiver antenna is modulated by using a single optical carrier at the input of an optical modulator. The optical domain signal is processed and is subsequently combined with a single unmodulated optical LO tone to provide an output RF signal for radiation by a transmitter antenna or for further digital processing by an on-board processor. This results in a clean generation of the frequency-converted RF signal at the output of the opto-electrical conversion stage.

In addition to mere communication purposes, optical principles can be used for measurements. For measuring parameters in the optical spectrum, respective optical sensors, like infrared (IR) sensors, image sensors, or alike, can be used.

It is also possible to implement photosensitivity mechanisms by using a so-called fibre Bragg grating (FBG) applied to an optical fibre core.

EP 4 174 454 A1 A, for example, describes a fuel gauging sensing device for a fuel tank for aircrafts, the device comprising an optical fibre harness established along the internal surface of the tank, a master optical controller connected to a first terminal of the optical fibre harness, a slave optical controller connected to a second terminal of the optical fibre harness, wherein the optical fibre harness comprises a plurality of FBG sensors, wherein the FBG sensors are spaced in the optical fibre harness between 1 mm and 25 mm and configured to provide temperature gradients inside the tank and wherein the master and slave optical controllers are configured to obtain the fuel gauging of the tank based on the output from the plurality Fibre Bragg Grating, FBG, sensors.

EP 4 109 050 A1 discloses an optical sensing system comprising an optical fibre, a light source, a first interrogator and a second interrogator. The optical fibre comprises one or more optical sensors. The light source is placed at a first end of the optical fibre and is configured to direct light towards the one or more optical sensors. The first interrogator is placed at the first end of the optical fibre. The second interrogator placed at a second, opposite end of the optical fibre. The first interrogator is configured to receive reflected light from the one or more optical sensors, and the second interrogator is configured to receive transmitted light from the one or more optical sensors.

EP 3 569 987 B1 refers to an optical sensor system with two or more optical sensors; two or more receivers; and an optical de-multiplexing system. Each optical sensor includes a fibre grating with a different wavelength characteristic. Each receiver includes a slope filter and a light detector and is associated with a respective one of the optical sensors. The optical de-multiplexing system is arranged to route light from each of the optical sensors to its associated receiver based on a wavelength of the light. Each slope filter is tuned to the wavelength characteristic of a respective one of the optical sensors and the slope filters are tuned to different wavelength characteristics.

EP 3 524 950 B1 discloses a temperature monitoring apparatus configured to monitor a temperature of a portion of a vehicle's electrical energy distribution network is disclosed. The apparatus comprises a first optical fibre, the first optical fibre comprising one or more temperature sensing sections, each temperature sensing section being for thermal contact with a portion of a vehicle's electrical energy distribution network. Each temperature sensing section is arranged to produce, in response to an optical input signal, an optical output signal indicative of the temperature of the temperature sensing section. The apparatus is arranged to determine a temperature of the portion of the vehicle's electrical energy distribution network based on one or more of the output optical signals in use.

EP 3 327 474 B1 refers to various embodiments providing a communication apparatus for a fibre-optic communication system for a vehicle such as an aircraft. The apparatus comprises: an optical coupler; an input port optically coupled to the optical coupler via a first waveguide, the input port being arranged to receive light; a modulator optically coupled to the optical coupler via a second waveguide, the modulator comprising a logic input and a fibre having FBG arranged to receive the light from the input port via the optical coupler, the modulator being operable to vary a strain force applied to the fibre according to a logic signal received at the logic input to modulate a wavelength of a modulated light signal reflected by the FBG back to the optical coupler; and an output port optically coupled to the optical coupler via a third waveguide so as to receive the modulated light signal therefrom, the output port being operable to output the modulated light signal.

EP 3 163 338 A1 describes a communication apparatus including an optical fibre along which radiation can be transmitted; an optical fibre grating formed within the optical fibre, the optical fibre grating having a structure, and being configured to reflect radiation at a particular wavelength; and an instrument coupled to the grating and configured to controllably modify the structure of the grating, thereby changing the wavelength at which the grating reflects radiation. A communication system including the communication apparatus is also described, along with a method of communicating a signal.

EP 2 672 234 B1 refers to a system for monitoring a fibre-reinforced composite component in production or in service. The system comprises: a composite component having reinforcing fibres which are encompassed by a matrix material; at least one optical fibre arranged to extend in a continuous path over a monitoring area of the composite component for contact with the matrix material; a signal generator configured to transmit an optical signal along the at least one optical fibre; and a detector device configured to detect scattering, and in particular backscattering, of the optical signal transmitted along the at least one optical fibre.

EP 1 962 123 B1 relates to a composite structure formed by a plurality of layers including an optical fibre for structural monitoring purposes which is at least partly embedded in a surface layer of said structure, and insulation means of the optical fibre areas susceptible to repair with respect to the surface layer in which they are integrated, particularly a protective cover and top and bottom separating films, and a process of repairing said areas comprising the following steps: removing the protective cover and the top separating film, extracting the area, repairing the optical fibre, relocating the area and providing a new protective cover.

Furthermore, US 11 392 805 B2 refers to a potentially small, gimballed, multi-sensor system that employs a shared aperture for at least some of the image sensors. Applications include intelligence, surveillance, target acquisition and reconnaissance (ISTAR), and guiding autonomous vehicles. The system can actively blend images from multiple spectral bands for clarity and interpretability, provide remote identification of objects and material, provide anomaly detection, control lasers and opto-mechanics for image quality, and use shared aperture using folded optics.

WO 2016/049052 A1 deals with a system for measuring an RF input signal frequency includes a sampling optical pulse train with a frequency-dithered repetition-rate, and a sub-sampled analogue link coupled to the optical pulse train whereby the RF input signal frequency is determined. This frequency dither imparts well-characterized modulation sidebands onto the input RF signal to be measured. By measuring the amplitude of these sidebands relative to the incoming aliased signal amplitude the frequency of the original signal is readily determined. The use of optical sampling dramatically increases the bandwidth over which the disambiguation technique is applied, and coarse disambiguation is achieved in a single acquisition.

In view of the above, numerous integrated applications for photonic communication or optical sensing may be available according to the prior art, indeed. Nevertheless, the known applications are intended for specific purposes, and each have their own individual layout. This complicates their implementation and extensibility.

### Summary

It may thus be seen as an object to provide a versatile applicability and easy implementation of photonic communication and/or sensing systems for measurement and control applications in apparatuses, such as vehicles, in particular aircrafts. This object is solved by the subject-matter of the independent claims.

In particular, a photonic transceiver module for a photonic communication system of an apparatus, in particular a vehicle, such as an aircraft is provided, comprising at least one signal interface for receiving and/or transmitting a signal from and/or to, respectively, at least one data collecting and/or transmitting unit for collecting and/or transmitting, respectively, at least one parameter value, an optical modulation unit for translating the signal to and/or from, respectively, the optical domain, and a device adaptor configured to attach the photonic transceiver module to the at least one data collecting and/or transmitting unit to communicate in the optical domain as a node of the photonic communication system.

A photonic periphery device for a photonic communication system of an apparatus, in particular a vehicle, such as an aircraft, is provided, comprising at least one data collecting and/or transmitting unit for collecting and/or transmitting, respectively, at least one parameter value, and at least one photonic transceiver module according to at least one of claims 1 to 8 enabling the photonic periphery device to communicate in the optical domain as a node in the photonic communication system.

A photonic communication system for an apparatus, in particular a vehicle, such as an aircraft, comprising at one corresponding photonic transceiver module and/or at least one corresponding photonic periphery device configured to communicate in the optical domain as a node of the photonic communication system.

An apparatus, such as a vehicle, in particular an aircraft, is provided, comprising a corresponding photonic communication system.

Photonic transceiver modules can provide a photonic integrated circuit (PIC). This enables the use of photonic integrated chips to interconnect data collecting and/or transmitting units. Photonic integrated chips have small size/weight and require lower power to operate, reducing at the same time wiring dimension, routing complexity and overall network weight. The photonic transceiver modules thereby enable a modular expandability of photonic communication system and that any sensor and/or aperture may be integrated into the photonic communication system. Any device involving at least one sensor and/or actor of the apparatus, including auxiliary devices, such as aircraft payloads, may thus constitute photonic periphery device which may be integrated into the photonic communication system.

Photonic periphery devices can serve as collectors of different apertures, which are systems capturing data regarding respective operational scenarios: Electro Optics (EO), ultraviolet (UV, Visible, Infrared (IR) cameras, Tactical links, Communications, Radio Frequency (RF)/IR/Laser Warners, Missile Approach Warners (MAW), etc. or from the platform itself, measuring structural information. Each data collector can perform multiple functions (for example IR camera and MAW) and share the data, reducing the total number of the apertures required and improving the signature and/or radar cross section of the platform (for stealth operation). This enables to establish the photonic communication system as a full optical network providing intrinsic redundancy (e.g., by using multiple fibres) and improves compliance with Electromagnetic Interference Requirements (EMI), Electromagnetic Compatibility Requirements (EMC), and Electrical Machinery Protected from Emanations Security (TEMPEST) of data links (by removing traditional metal base cabling and waveguides).

The photonic communication system may further provide or at least involve a computing device and/or computer system. A corresponding communication system configuration arrangement can be provided which is configured to carry out the steps of a corresponding method for setting up the photonic communication system. A corresponding communication system configuration program for configuring a computing device comprises instructions which, when the program is executed by a computer, cause the computer to carry out a corresponding method. A computer-readable data carrier has stored thereon the communication system configuration program. The computer-readable data carrier may include and/or be comprised of a computer-readable medium and/or a data carrier signal carrying the computer system configuration program and/or comprising respective instructions which, when the program is executed by a computer, cause the computer to carry out a method for configuring a computing device and/or photonic communication system.

The solution provides a versatile backbone for photonic communications within and around apparatuses. The backbone serves as acquisition and interchange media for the apertures and the sensing devices (data collectors) as well as actuators and processing stages, reducing the integration and installation complexity. The data collectors can be external or internal to the platform and the processing stages can be located in convenient areas of any apparatus, e.g., an avionics bay of an aircraft. Data collectors can be different systems capturing data from operational scenario: Electro Optics (EO), Infrared (IR) cameras, tactical links, Communications, Radio Frequency (RF)/IR/Laser warners, Missile Approach Warners (MAW), etc. or from the platform itself, measuring structural information. Each data collector can perform multiple functions (for example IR camera and MAW) and share the data, reducing the total number of the apertures required and improving an observable signature and/or radar cross section of the platform (e.g., for stealth operation).

Optical direct sampling of signals can be implemented in each photonic transceiver module and/or photonic periphery device, possibly by use of a PIC. The optical sampling in conjunction with PIC permits to have structural sensing, high bandwidth and to remove mixers and front-end transceivers, necessary in traditional technology for the example in RF apertures. It will reduce number of components and size and weight on the platform. The photonic transceiver modules and/or photonic periphery devices can act as nodes in the photonic communication system. Having a photonic transceiver module and/or photonic periphery device PIC on each aperture permits each node to enter data into the data network of the platform, with high processing speed and bandwidth due to the usage of respective the optical wavelengths. It enables the installation of front-ends closer to the apertures, allowing for early digitization and preserving signal quality (less data losses).

This makes a full fibre solution possible which may help in lowering dimensions and weight of the data infrastructure on any platform. It would save overall weight and size. A reusable and customizable set of assets (data collectors like sensors/communication units and structural sensing apertures) can be provided by the photonic transceiver modules and/or photonic periphery devices in a manner such that they are attachable to the backbone, to reduce and optimize the number of installed payloads on a platform.

Main advantages of the solution can thus be seen in the performance (high speed data rate) and high availability (all sensor and communication devices on a single infrastructure) with novel way to structural monitoring capability of the platform. Overall Size, Weight and Power (SWaP) demands are reduced due to the photonic components involved, but also its associated cabling needs. Due to minimal dimensions of optical fibres, respective cabling can be made with a very high number of optical fibres, with irrelevant weight variation, permitting a strong segregation of data according to security classification and intrinsically permitting cyber protection, due to a complete immunity to electromagnetic data stealing (by internal to the platform compromised devices or external connected malicious devices). The use of PICs and direct photonic sampling can be a key enabler that permits these advantages with respect to traditional architectures and datalinks.

Further developments can be derived from the dependent claims and from the following description. Features described with reference to apparatuses, systems, devices and/or modules may be implemented as method steps, or vice versa. Therefore, the description provided in the context of apparatuses, systems, devices and/or modules applies in an analogous manner also to respective methods. In particular, the functions of the apparatuses, systems, devices and/or modules as well as of any of their components may be implemented as steps of methods and the method steps may be implemented as functions of the apparatuses, systems, devices and/or modules.

According to an aspect of a photonic transceiver module, the at least one data collecting and/or transmitting unit provides and/or is associated with an aperture in a body of the apparatus. Apertures are commonly formed in bodies of apparatuses for receiving and/or transmitting signals through the body. Each aperture can be used by a transmitter or receiver system, and it can be paired with a photonic transceiver module providing a dedicated PIC which combines all photonic devices necessary to interface with the network into a single photonic chip.

According to an aspect of a photonic transceiver module, the at least one signal interface is configured to perform direct photonic sampling of an external signal. The direct photonic sampling can involve a translation of any input signal into digital and/or analogue communication signals to be transmitted through optical fibres. Such sampling can be performed by the PIC. Signals from different photonic transceiver modules and/or photonic periphery devices can be translated to different wavelengths in order to distinguish the signals from each other. Thereby, multiple photonic transceiver modules and/or photonic periphery devices can communicate over the same optical fibre. This helps in improving versatility and modular expandability of a photonic communication system as described herein.

According to an aspect of a photonic transceiver module, the at least one signal interface is configured for sending and/or receiving an optical continuous wave signal and/or a pulse train. The continuous wave signal and/or pulse train can be used for direct sampling electromagnetic signals in the optical domain. In particular optical continuous wave signals may help in addition to sense structural information regarding the apparatus. Hence, using continuous wave signals and/or pulse trains helps in further enhancing versatility and modular expandability of a photonic communication system as described herein.

According to an aspect of a photonic transceiver module, the optical modulation unit comprises a Mach-Zehnder modulator for translating at least one signal to the optical domain. A Mach-Zehnder modulator can be provided as a Mach-Zehnder interferometer having an electro-optical element located in one of its arms in order to achieve a phase shift between the two arms of the interferometer. An intensity at the output of the interferometer varies depending on the value of the phase shift. Accordingly, the Mach-Zehnder modulator can provide a reliable way for optical modulation, for example for sampling signals and transmitting them in the optical domain.

According to an aspect of a photonic transceiver module, the optical modulation unit is configured to translate different signals to the optical domain with specific different optical wavelengths. The different optical wavelengths allow for spectral domain classification permitting to discriminate multiple sources from each other as well us to identify and therefore avoid false alarms. This helps in further enhancing security of the photonic communication system, as well as to enable a high degree of versatility and modular expandability thereof.

According to an aspect of a photonic transceiver module, the optical modulation unit is configured to translate different signals to the optical domain in analogue and/or digital forms. In other words, any signals received and/or sent by the optical modulation unit can be modulated in an analogue form and/or digitised. In particular sensor inputs may be directly modulated to analogue optical signals and/or digital signals. This helps in further enhancing versatility and modular expandability of a photonic communication system as described herein.

According to an aspect of a photonic transceiver module, the at least one signal interface is configured to simultaneously collect and/or transmit, respectively, at least two different parameter values. Consequently, the photonic transceiver module may fulfil multiple sensory and/or transmission functions. At least one of the parameter values may be used for measuring and/or sensing at least one mechanical parameter of the apparatus during data transmission while not interfering with data traffic. Thereby, a sharing concept can be implemented to share different parameters captured by cameras, transmitters, antennas, etc. (commonly referred as "apertures") and sensing devices (monitoring temperature, mechanical stress, vibration, loads, pressure, etc.). This helps, in creating synergetic effects and further enhancing the functional spectrum of a photonic communication system as described herein.

According to an aspect of a photonic communication system, the photonic communication system may further comprise at least one at least one processing unit connected to at least one photodetector configured to detect and/or send at least one parameter value sent from and/or to be received by a node of the photonic communication system in the optical domain. Each of the nodes may be provided as a photonic transceiver module and/or photonic periphery device. The photonic communication system may further provide or at least involve a computer system comprising the at least one processing unit or at least in part being provided by the processing unit. The processing unit may collect data transmitted through the photonic communication system by means of the photodetector and analyse the data by means of the processing unit. The processing unit may thereby provide the central instance managing communication in the photonic communication system. This helps in further enhancing versatility and modular expandability of a photonic communication system as described herein.

According to an aspect of a photonic communication system, the photonic communication system may further comprise an optical harness configured to carry at least one parameter value sent from and/or to be received by a node of the photonic communication system in the optical domain. The optical harness can provide an optical backbone and can comprise at least one optical communication line having at least one optical fibre. The optical backbone serves as acquisition and interchange media for the apertures and the sensing devices (data collectors) and processing stages, reducing the integration and installation complexity. The data collectors can be external or internal to the platform and the processing stages. Thereby, a fully optical network may be implemented which provides intrinsic redundancy (multiple fibres) and improves compliance with EMI, EMC and TEMPEST to provide security of information systems by the elimination of leaking emissions, including unintentional radio or electrical signals, sounds, and vibrations. Immunity to espionage or malicious extraction of data links (by removing traditional metal-based cabling and waveguides) can be achieved as well.

According to an aspect of a photonic communication system, a communication branch of the optical harness optically connects to multiple nodes of the photonic communication system. As nodes, photonic transceiver modules and/or photonic periphery devices can be situated on the same branch. The optical harness may comprise multiple branches for communicating with nodes in respective sections of an apparatus and/or for providing redundant communication paths. Furthermore, the nodes may be provided with energy via the optical harness (power over fibre). This helps in further enhancing safety, versatility as well as modular expandability of a photonic communication system as described herein.

According to an aspect of a photonic communication system, the optical harness comprises at least one sensory section for sensing at least one functional and/or structural parameter of the apparatus. The at least one sensory section can be capable of sensing at least one mechanical parameter of the apparatus without interfering with any data transmissions. Thereby, the optical harness itself can sensing passive information which in turn can be used for monitoring and controlling the apparatus by means of at least one processing unit. The optical network itself supports the monitoring of the platform, by incorporating the sensors directly into the fibre links. For example, Fibre Bragg Gratings (FBG) can be installed in the optical links, to map an entire structure to be monitored, such as a fuselage of an aircraft, and monitor the temperature at selected points of the platform, e.g., for IR signature control. Other parameters that could be monitored are pressure and load factors, what could be used for deflection calculations and subsequent pointing error estimation for proper actuator use (dynamic error budget). This helps in further widening the functional spectrum and versatility of a photonic communication system as described herein.

### Brief Description of the Drawings

The subject-matter will hereinafter be described in conjunction with the following drawing figures, wherein like numerals denote like elements, and wherein:
Fig. 1 is a schematic representation of an apparatus in the form of a vehicle, such as an aircraft, comprising a photonic communication system.
Fig. 2 is a schematic representation of the communication system shown in Fig. 1 comprising several nodes.
Fig. 3 is a schematic representation of a branch of the communication system shown in Fig. 2.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject-matter may be obtained through a review of the illustrations together with a review of the detailed description that follows.

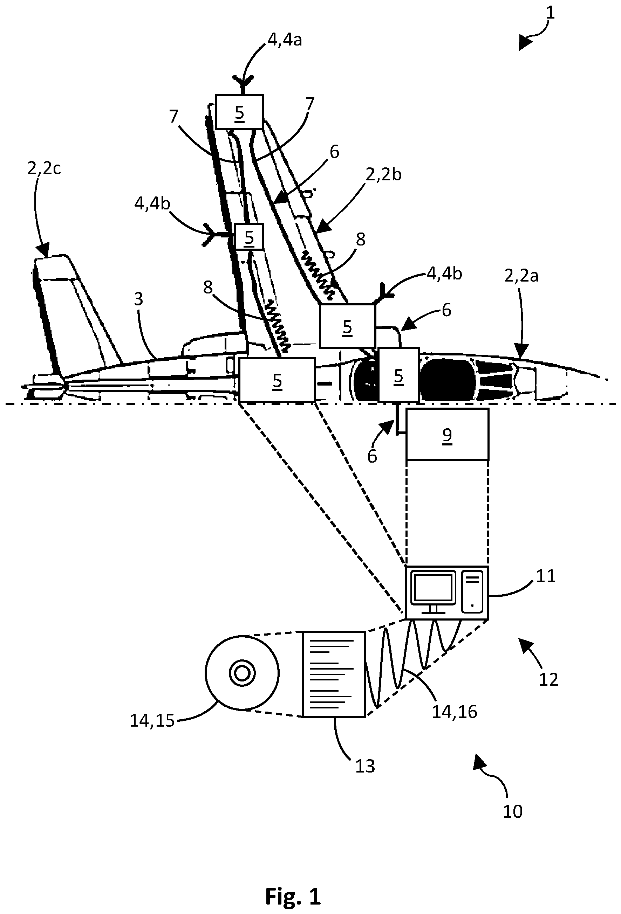

Fig. 1 shows a schematic representation of an apparatus 1 in the form of a vehicle, such as an aircraft. The apparatus 1 can comprise several apparatus sections 2, for example, a first section 2a, a second section 2b, and/or a third section 2c. The first section 2a may be a fuselage. The second section 2b may be a main wing. The third section 2c may be a rear wing. A body 3, for example, in the form of an outer shell, casing, covering, enclosure, hull, supportive structure, or alike, of the apparatus 1 is provided with data collecting and/or transmitting units 4, for example in the form of apertures.

The data collecting and/or transmitting units 4 may comprise communication apertures 4a for communicating through the body 3 with communication partners outside of the apparatus 1, and/or sensor apertures 4b for sensing physical parameters inside, outside and/or around the apparatus 1. The data collecting and/or transmitting units 4 can be connected to part of nodes 5 connected to an optical harness 6 which may have several branches 7. At least one sensory section 8 can be provided and/or formed at the harness 6, for example, at a particular branch 7 thereof, for sensing apparatus parameters.

A processing unit 9 is connected to the optical harness 6 and configured to optically and/or electronically process any analogue and/or digital data communicated via the optical harness 6 from and/or to the nodes 5. The processing unit 9 may act as a consumer of such data and/or provide the data to a user/consumer, such as an operator of the apparatus 1, in a respective consumable form. Furthermore, the processing unit 9 may carry out any measurement and/or control functions with respect to the apparatus 1 and its operation.

A photonic communication system 10 comprises the data collecting and/or transmitting units 4, nodes 5, optical harness 6, sensory sections 8 and/or processing unit 9. The photonic communication system 10 may further comprise a computing device 11 and/or a communication system configuration arrangement 12. The computing device 12 may be a part of and/or integrated into the processing unit 9 and/or at least one of the nodes 5. The computer system integration arrangement 2 may be integrated into and/or comprise the computing device 11.

The computing device 11 may be configured to execute a computer system integration program 13. A computer-readable data carrier 14 has stored thereon the communication system configuration program 13 and may take the form of a computer-readable medium 14 and/or data carrier signal 16. When carrying out the computer system integration program 13, the computing device 11 may enable the processing unit 9 and/or at least one of the nodes 5 to communicate as a part of the photonic communication system 10.

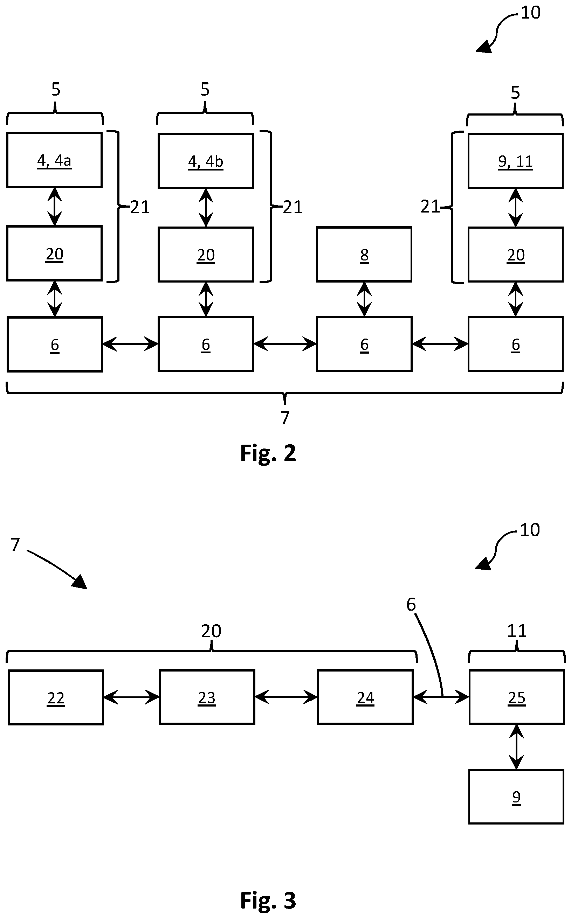

Fig. 2 is a schematic representation of the communication system 10 shown in Fig. 1 comprising several nodes 5. Each of the nodes 5 may comprise a photonic transceiver module 20 for translating any data communicated via the optical harness 6 from and/or to a respective signal, parameter value, measurement value and/or control value or alike. The nodes 5 may comprise at least one data collecting and/or transmitting unit 4, communication aperture 4a, sensor aperture 4b, processing unit 9 and/or computing device 11. A photonic periphery device 21 may comprise at least one data collecting and/or transmitting unit 4, communication aperture 4a, sensor aperture 4b, processing unit 9 and/or computing device 11. Furthermore, at least one sensory section 8 can be provided at the harness 6.

The nodes 5 can each serve as a Shared Aperture Data Collector via at least one respective data collecting and/or transmitting unit 4 connected and/or associated to the corresponding node 5. The communication aperture 4a can primarily serve as a communication receiver and transmitter, but it can be also used to provide e.g., incoming Electronic Support Measure (ESM) information, which falls into specific communication bands, e.g., for self-protection for the platform use. Similarly, the sensor aperture 4b, for example an infrared missile warning receiver, can be shared in the platform, i.e., apparatus 1, for this first intended use case (self-protection). But it can be also used for situation awareness and for security protection use, by permitting access to the captured data to a Self-Protection System and also to any other system onboard (e.g., a fusion subsystem for any detected tracks, or an aiming subsystem to support for firing), including the processing unit 9 and/or computing device 11. Except for a possibly passive structural sensing through the sensory section 8, all the nodes 5 may include the photonic transceiver module 20 which may be integrated into a Photonic Integrated Circuit (PIC).

Any monitoring and environmental control of the apparatus 1 can be performed by adding sensors to the photonic communication system 10 as respective data collecting and/or transmitting units 4, communication apertures 4a, sensor apertures 4b and/or sensory sections 8 without impacting on its data transfer functions. In this way, optical sensors for temperature, pressure, load, fire, strain, etc. can be added to the network by means of the data collecting and/or transmitting units 4 and/or the sensory sections 8, permitting extended capabilities like real-time measurement for monitoring and/or control of the apparatus 1. The photonic communication system 10 may thus be understood as a modularly extendable optical network. Finally, the optical harness 6 used for the networking can also be used for providing Power-over-Fibre to the remote and non-accessible units, such as the nodes 5 and/or sensory sections 8.

Fig. 3 is a schematic representation of a branch 7 of the communication system 10 shown in Fig. 2. According to this exemplary embodiment, the branch 7 may comprise at least one photonic transceiver module 20 connected to the processing unit 9 and/or the computing device 11 via the harness 6. The photonic transceiver module 20 comprises a device adaptor 22, a signal interface 23 and an optical modulation unit 24. The device adapter 22 is configured to attach the photonic transceiver module 20 to the at least one data collecting and/or transmitting unit 4 in order to enable the at least one data collecting and/or transmitting unit 4 to communicate in the optical domain. The device adapter 22 is connected to the signal interface 23 for receiving and/or transmitting a signal from and/or 2, respectively, the at least one data collecting and/or transmitting unit 4. The signal comprises at least one parameter value.

The optical modulation unit 24 modulates the signal for communication and the optical domain. The signal is then transmitted via the harness 6 to be detected by a photodetector 25. The photodetector 25 can be connected to the processing unit 9. The computing device 11 may comprise the photodetector 25 and the processing unit 9. Numerous of the sensory sections 8 and numerous of the optical modulation units 24 of various photonic transceiver modules 20 and/or photonic periphery devices 21 may communicate with the processing unit 9 and/or computing device 11 via the photodetector 25. Each data collecting and/or transmitting unit 4 can be paired with a dedicated photonic transceiver module 20, for example, providing a PIC which combines all photonic devices necessary to interface with the photonic communication system 10 into a single photonic chip. The photonic circuit can perform sampling in the optical domain to maximize processing speed and data performance.

The photonic communication system 10 can thus make use of the direct photonic sampling of external signals, with advantages in speed, bandwidth, latencies, and relevant set of functional requirements for any kind of particularly security and/or reliability relevant apparatus 1, such as military aircraft, replicable also into commercial aircrafts, or alike. Different types of one data collecting and/or transmitting units 4 can be integrated with the photonic communication system 10. A general integration scheme can make use of an optical pulse train implemented by the signal interface 23 that samples incoming electromagnetic environment signals (IR, UV, RF) from the data collecting and/or transmitting unit 4 and delivers the sampled data in electrical form to optical modulation unit 24. The coupling between the electromagnetic environment and the sampling stage can be achieved at the optical modulation unit 24, for example, by being input into a Mach-Zehnder modulator (MZM), such that the photonic transceiver module 20 can translate any environment phenomena to the optical domain (other interfacing types are also possible).

The photonic transceiver modules 20 thus can help to enable multi-channel photonic sampling and multi-point sensing, in order to digitize the signals and also to sense environmental parameters at any point in the apparatus 1. The signals collected at each data collecting and/or transmitting unit 4 and the sensory sections 8 can be conditioned, such that respective optical signals are finally delivered to the at least one photodetector 25 that can convert the optical data into electrical information. The electrical signal obtained at the output of the at least one photodetector 25 can be digitized by an Analog to Digital Converter (ADC) and eventually delivered to a client application implemented in or by the processing unit 9 and/or computing device 11.

Sharing data collecting and/or transmitting units 4, communication apertures 4a and/or sensor apertures 4b is enabled by possible simultaneous modulation and/or digitalizing of incoming signals, sensing, and transporting data inside the apparatus 1. These principles are applicable in multiple domains, e.g., space, land, maritime. The sharing concept can be applied to cameras, transmitters, antennas, etc. (commonly referred as "apertures") and sensing devices (monitoring temperature, mechanical stress, vibration, loads, pressure, etc.) attached to the optical communication system 10. Each data collecting and/or transmitting unit 4 can be shared as much as possible, for example as a laser communicator, a Sensor and/or an Antenna).

### List of Reference Signs

- 1: apparatus / vehicle / air
- 2: apparatus section
- 2a: first section / fuselage
- 2b: second section / main wing
- 2c: third section / rear wing
- 3: body
- 4: data collecting and/or transmitting unit / aperture
- 4a: communication aperture
- 4b: sensor aperture
- 5: node
- 6: optical harness
- 7: branch
- 8: sensory section
- 9: processing unit
- 10: photonic communication system
- 11: computing device
- 12: communication system configuration arrangement
- 13: communication system configuration program
- 14: computer-readable data carrier
- 15: computer-readable medium
- 16: data carrier signal
- 20: photonic transceiver module
- 21: photonic periphery device
- 22: device adaptor
- 23: signal interface
- 24: optical modulation unit
- 25: photodetector

## Claims

1. Photonic transceiver module (20) for a photonic communication system (10) of an apparatus (1), in particular a vehicle, such as an aircraft, comprising
at least one signal interface (23) for receiving and/or transmitting a signal from and/or to, respectively, at least one data collecting and/or transmitting unit (4) for collecting and/or transmitting, respectively, at least one parameter value,
an optical modulation unit (24) for translating the signal to and/or from, respectively, the optical domain, and
a device adaptor (22) configured to attach the photonic transceiver module (20) to the at least one data collecting and/or transmitting unit (4) to communicate in the optical domain as a node (5) of the photonic communication system (10).

2. Photonic transceiver module (20) according to claim 1, wherein the at least one data collecting and/or transmitting unit (4) provides and/or is associated with an aperture (4a, 4b) in a body (3) of the apparatus (1).

3. Photonic transceiver module (20) according to claim 1 or 2, wherein the at least one signal interface (23) is configured to perform direct photonic sampling of an external signal.

4. Photonic transceiver module (20) according to at least one of claims 1 to 3, wherein the at least one signal interface (23) is configured for sending and/or receiving an optical continuous wave signal and/or a pulse train.

5. Photonic transceiver module (20) according to at least one of claims 1 to 4, wherein the optical modulation unit (24) comprises a Mach-Zehnder modulator for translating at least one signal to the optical domain.

6. Photonic transceiver module (20) according to at least one of claims 1 to 5, wherein the optical modulation unit (24) is configured to translate different signals to the optical domain with specific different optical wavelengths.

7. Photonic transceiver module (20) according to at least one of claims 1 to 6, wherein the optical modulation unit (24) is configured to translate different signals to the optical domain in analogue and/or digital forms.

8. Photonic transceiver module (20) according to at least one of claims 1 to 7, wherein the at least one signal interface (23) is configured to simultaneously collect and/or transmit, respectively, at least two different parameter values.

9. Photonic periphery device (21) for a photonic communication system (10) of an apparatus (1), in particular a vehicle, such as an aircraft, comprising
at least one data collecting and/or transmitting unit (4) for collecting and/or transmitting, respectively, at least one parameter value and
at least one photonic transceiver module (20) according to at least one of claims 1 to 8 enabling the photonic periphery device (21) to communicate in the optical domain as a node (5) in the photonic communication system (10).

10. Photonic communication system (10) for an apparatus (1), in particular a vehicle, such as an aircraft, comprising at one photonic transceiver module (20) according to at least one of claims 1 to 8 and/or at least one photonic periphery device (21) according to claim 9 configured to communicate in the optical domain as a node (5) of the photonic communication system (10).

11. Photonic communication system (10) according to claim 10, further comprising at least one at least one processing unit (9) connected to at least one photodetector (25) configured to detect and/or send at least one parameter value sent from and/or to be received by a node (5) of the photonic communication system (10) in the optical domain.

12. Photonic communication system (10) according to claim 10 or 11, further comprising an optical harness (6) configured to carry at least one parameter value sent from and/or to be received by a node (5) of the photonic communication system (10) in the optical domain.

13. Photonic communication system (10) according to claim 12, wherein a communication branch (7) of the optical harness (6) optically connects to multiple nodes (5) of the photonic communication system (10).

14. Photonic communication system (10) according to at least one of claim 10 to 13, wherein the optical harness (6) comprises at least one sensory section (8) for sensing at least one functional and/or structural parameter of the apparatus (1).

15. An apparatus (1), such as a vehicle, in particular an aircraft, comprising a photonic communication system (10) according to at least one of claims 10 to 14.
